(19) Europäisches Patentamt
European Patent Office
Office européen des brevets

(11) EP 2 423 281 A1

(12) **EUROPEAN PATENT APPLICATION**
published in accordance with Art. 153(4) EPC

(43) Date of publication:
**29.02.2012 Bulletin 2012/09**

(21) Application number: **10766970.7**

(22) Date of filing: **09.04.2010**

(51) Int Cl.:
***C09D 183/04*** *(2006.01)* ***B32B 27/00*** *(2006.01)*
***C09D 7/12*** *(2006.01)* ***G02B 1/10*** *(2006.01)*
***G02B 5/23*** *(2006.01)*

(86) International application number:
**PCT/JP2010/056460**

(87) International publication number:
**WO 2010/122912 (28.10.2010 Gazette 2010/43)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.04.2009 JP 2009102229**

(71) Applicant: **Tokuyama Corporation**
**Shunan-shi, Yamaguchi-ken 745-8648 (JP)**

(72) Inventors:
- **NAKATSUKASA, Shunichiro**
**Shunan-shi**
**Yamaguchi 745-8648 (JP)**
- **MORI, Katsuhiro**
**Shunan-shi**
**Yamaguchi 745-8648 (JP)**

(74) Representative: **McCluskie, Gail Wilson**
**J.A. Kemp & Co.**
**14 South Square**
**Gray's Inn**
**London WC1R 5JJ (GB)**

(54) **COATING COMPOSITION**

(57) [Problem] To provide a coating composition for forming a hard coating which, by itself, favorably adheres to a plastic optical substrate, and effectively prevents the occurrence of cracks caused by the thermal hysteresis at the time of curing.

[Means for Solution] The coating composition for forming a hard coating, contains a fine inorganic oxide particle, a hydrolyzable organosilicon compound, water, a curing catalyst and an organic solvent, wherein cyclic ketone is contained in an amount of 0.10 parts by mass to 30.00 parts by mass per 100 parts by mass of the total of the fine inorganic oxide particle and the hydrolyzable organosilicon compound.

EP 2 423 281 A1

## Description

Technical Field:

This invention relates to a coating composition used for forming a hard coating on the surfaces of plastic optical substrates such as plastic lenses to impart scratch resistance, weather-proof property and light resistance thereto.

Background Art:

Plastic lenses are now becoming a main stream in the field of spectacle lenses owing to their such features as small weight, safety, easy workability and fashionability that are not possessed by glass lenses.
The resin lenses, however, are liable to be easily scratched. Therefore, attempts have been made to improve the above defect by forming a silicone type hard coating on the surfaces of the lenses.

The hard coating is formed, usually, by applying a coating composition comprising chiefly a fine inorganic oxide particle, a polymerizable organic silane compound (hydrolyzable organosilicon compound), a polymerizing catalyst, water and an organic solvent onto the surfaces of the plastic lens, followed by heating to remove the organic solvent and to effect the curing by polymerization (patent document 1). Further, attempts have been made to improve the coating agent such as improving the refractive index and improving storage stability (patent document 2) without, however, any change in the basic composition from the composition proposed in the above patent document 1.

Prior Art Documents:

Patent Documents:

Patent document 1: JP-B-57-2735
Patent document 2: Pamphlet of WO01/42381

Outline of the Invention:

Problems that the Invention is to Solve:

The above hard coating, however, contains much fine inorganic oxide particle and, therefore, inherently lacks closely adhering property to the plastic substrates. Besides, due to its coefficient of thermal expansion which is greatly different from that of the plastic substrates, the hard coating tends to be cracked due to heating (usually, at about 120˚C) at the time of being cured.

So far, therefore, the surfaces of the substrates such as plastic lenses have been subjected to the chemical treatment such as primer treatment or the physical treatments such as polishing, corona discharge treatment, plasma discharge treatment and UV ozone treatment in addition to the simple chemical treatment using an alkali solution in order to further improve the closely adhering property. However, the above surface treatment steps bring about a decrease in the productivity and an increase in the cost of production. Therefore, it has been desired to simplify the steps as much as possible.
Besides, the hard coating has a low resistance against hot water and is considered to be partly peeled off from the plastic base material if it comes in contact with hot water often exhibiting defective appearance and, therefore, still leaves room for improvement.

It is, therefore, an object of the present invention to provide a coating composition for forming a hard coating which, by itself, favorably adheres to a plastic optical substrate, has a large resistance against hot water, and effectively prevents the occurrence of cracks caused by the thermal hysteresis at the time of curing.
The invention, further, provides a coating composition that can be effectively used as a hard coating for the plastic substrates in which a photochromic compound is dispersed or for the plastic substrates having a photochromic layer in which the photochromic compound is dispersed on the surface of the plastic substrate.

Problems that the Invention is to Solve:

According to the present invention, there is provided a coating composition for forming a hard coating, containing, as essential components, a fine inorganic oxide particle, a hydrolyzable organosilicon compound, water, a curing catalyst and an organic solvent, wherein cyclic ketone is contained in an amount of 0.10 parts by mass to 30.00 parts by mass

per 100 parts by mass of the total of the fine inorganic oxide particle and the hydrolyzable organosilicon compound.
In the coating composition of the present invention, it is desired that:

(1) The cyclic ketone is a compound (e.g., N-methylpyrrolidone) containing an oxygen atom or a nitrogen atom as an element for constituting a ring, or is a cyclohexanone; and
(2) The hydrolyzable organoslicon compound is contained in an amount of 40 to 90 parts by mass per 100 parts by mass of the total of the fine inorganic oxide particle and the hydrolyzable organosilicon compound.

Effects of the Invention:

The present invention has an important feature in that the coating composition is blended with cyclic ketone. Upon being blended with the cyclic ketone, the hard coating that is formed excellently adheres to the plastic optical substrate such as plastic lens. Besides, the hard coating has excellent resistance against the thermal hysteresis and effectively prevents the occurrence of cracks caused by the thermal hysteresis such as curing.
The coating composition makes it possible to form a hard coating that favorably adheres to the substrate even only through a chemical treatment by using an alkali solution that has heretofore been widely used. Besides, the hard coating has improved resistance against hot water, permits the adhesion to be decreased little even if it is brought into contact with hot water, and is industrially very highly utilizable.
Though the reason has not yet been clarified why the hard coating having the above properties is formed upon being blended with the cyclic ketone, the inventors speculate as described below.
Namely, the cyclic ketone has a high boiling point and its vapor pressure is low. More than that, the cyclic ketone has a high degree of affinity to the polymer forming a plastic optical substrate such as plastic lens, e.g., poly(meth)acrylate ((meth)acrylate resin) and poly(thio)urethane ((thio)urethane resin), and is capable of dissolving or swelling these polymers. At the time of heating and curing the coating composition that is applied onto the substrate, therefore, the cyclic ketone is not all vaporized or volatilized but partly infiltrates into the surface portion of the substrate, the hard coating is formed in a state where the surface portion of the substrate is swollen, and the cyclic ketone remains in the hard coating. It is, therefore, considered that the hard coating that is formed excellently adheres to the plastic optical substrate and has excellent resistance against hot water. Besides, since the cyclic ketone remains therein, the hard coating that is formed is imparted with a suitable degree of flexibility, exhibits a high degree of follow-up property to the surface of the substrate and, as a result, is considered to be highly resistant against the thermal hysteresis (difference in the thermal expansion).

Mode for Carrying Out the Invention:

The coating composition of the present invention contains, (A) a fine inorganic oxide particle, (B) a hydrolyzable organosilicon compound, (C) water, (D) a curing catalyst and (E) an organic solvent, as well as (F) a cyclic ketone in addition to the above components.

<(A) Fine inorganic oxide particles>

As the fine inorganic oxide particle, there can be used, without any limitation, a known fine inorganic oxide particle that is used for the conventional coating agents having low refractive indexes and high refractive indexes. Among coating agents having a low refractive index, it is desired to use a fine inorganic oxide particle comprising chiefly fine silica particle. Among coating agents having a high refractive index, it is further desired to use fine particles of an oxide containing at least one kind of element selected from Si, Al, Ti, Fe, In, Zr, Au, Sn, Sb, W and Ce or a composite inorganic oxide thereof and, specifically, to use fine particles of an oxide containing at least one kind of element selected from the group consisting of Si, Al, Ti, Fe, Zr, Sn, Sb and W or a composite inorganic oxide thereof.
When a fine cerium oxide particle is contained as part of the fine inorganic oxide particle, it is made possible to improve the light resistance and appearance of the hard coating that is formed.
Further, the particle size of the fine inorganic oxide particle is not particularly different from that of the one used for the conventional coating agents, and there can be preferably used the fine inorganic oxide particle having a primary particle size of about 1 to about 300 nm as observed by using an electron microscope (TEM). Fine particles of such a particle size are usually used in a form of being dispersed in water or in some of the organic solvents described below (particularly, alcohol type solvent) as a dispersion medium, and are, usually, colloidally dispersed to prevent the particles from aggregating. In the invention, for example, the fine inorganic oxide particle is, preferably, a fine silica particle (i.e., silica sol) or a fine composite inorganic oxide particle blended in the coating composition in the form of a sol being dispersed in a water-soluble organic solvent or water from the standpoint of being densely and homogeneously dispersed in the hard coating.

When the fine inorganic oxide particle is used in the form of sol, it is desired for improving usability that the fine inorganic oxide particle is contained in the sol at a concentration (solid component concentration) of 10 to 50% by mass.

As the water-soluble organic solvent used as a dispersion medium for the fine inorganic oxide particle, there can be preferably used an alcohol medium such as isopropanol, ethanol, methanol or ethylene glycol. However, there can be also used methyl ethyl ketone, methyl isobutyl ketone or dimethylacetamide.

The silica sol used for the coating agent of a low refractive index is industrially available. For instance, the sols using water as a dispersion medium have been placed in the market by Nissan Kagaku Kogyo Co. in the trade names of Snowtex OXS, Snowtex OS, Snowtex O, Snowtex 0-40, etc. The sols which uses the water-soluble organic solvent as a dispersion medium have been placed in the market by Nissan Kagaku Kogyo Co. as Methanol Silica Sol, MA-ST-MS (dispersion medium: methanol), IPA-ST (dispersion medium: isopropanol), etc.

The fine composite inorganic oxide particle used for the coating agent of a high refractive index contains two or more kinds of inorganic oxides, and is, concretely and desirably, a fine composite inorganic oxide particle containing at least two or more kinds of inorganic oxides selected from Si, Al, Ti, Fe, In, Zr, Au, Sn, Sb, W and Ce.

Though there is no particular limitation, the fine composite inorganic oxide particle used in the present invention desirably contains zirconium oxide and, concretely and desirably, 0 to 80% by mass of titanium oxide, 1 to 25% by mass of zirconium oxide, 0 to 80% by mass of tin oxide, 0 to 20% by mass of antimony pentoxide, 0 to 10% by mass of tungsten oxide or 0 to 25% by mass of silicon dioxide.

Like the silica sols, the fine composite inorganic oxide particles have been placed in the market in the form of sols using the water-soluble organic solvent as a dispersion medium, such as HX Series, HIT Series and HT Series which are the products of Nissan Kagaku Kogyo Co. and Opto Lake Series which are the products of Nikki Shokubai Kasei Co.

Further, the coating agent of a high refractive index may use a fine antimony pentoxide particle as the fine inorganic oxide particle since it is easily available. It is desired that the fine antimony pentoxide particle, too, is used in the coating composition in the form of a sol being dispersed in the water-soluble organic solvent or water. It is, further, desired that the sol of antimony pentoxide has a solid component concentration of 10 to 50% by mass. Like the silica sols, the fine antimony pentoxide particle has been placed in the market in the form of a sol using the water-soluble organic solvent as a dispersion medium, such as Sun Colloid AMT-330S, AMT-332S - NV, etc. which are the products of Nissan Kagaku Kogyo Co.

The amount of blending the fine inorganic oxide particle may be suitably determined depending upon the kind of the inorganic oxide, properties desired for the hard coating that is finally obtained and the object. Usually, however, the amount of blending the fine inorganic oxide particle is set in combination with the amount of use of other components so that the ratio of the fine inorganic oxide particle that occupies the finally formed hard coating becomes 20 to 80% by mass and, specifically, 40 to 60% by mass. The mass of the hard coating can be found by weighing the mass of the solid components that remain when the coating composition is heated at 120˚C for 3 hours after the following hydrolyzable organosilicon compound has been hydrolyzed.

When a plurality of kinds of fine inorganic oxide particles are used at the above blending ratio, their total mass becomes the amount of blending the fine inorganic oxide particles. Further, when a plurality of kinds of hydrolyzable organosilicon compounds are used, their total mass becomes the amount of blending the hydrolyzable organosilicon compounds.

In the invention, further, when the fine cerium oxide particle is used to further improve the light resistance and appearance of the hard coating, it is desired that the amount of use thereof is 1 to 20% by mass of the fine inorganic oxide particle.

<(B) Hydrolyzable organosilicon compounds>

The hydrolyzable organosilicon compound works as a binder for the fine inorganic oxide particle, and forms a transparent cured body that serves as a matrix in the hard coating. Therefore, there is used an organosilicon compound in which a hydrolyzable alkoxy group is bonded to a silicon atom. The organosilicon compound is desirably a compound in which two or more hydrolyzable alkoxy groups are bonded to the silicon atoms, and a known organosilicon compound can be used without any limitation.

Concrete examples of the component (B) include γ-glycidoxypropyltrimethoxysilane, γ-glycidoxypropylmethyldimethoxysilane, γ-glycidoxypropylmethyldiethoxysilane, γ-glycidoxypropyltriethoxysilane, β-(3,4-epoxycyclohexyl) ethyltrimethoxysilane, tetraethoxysilane, tetramer of tetramethoxysilane, pentomer of tetraethoxysilane, vinyltrimethoxysilane, vinyltriethoxysilane, vinyltriacetoxysilane, methyltrimethoxysilane, methyltriethoxysilane, methyltriphenoxysilane, dimethyldimethoxysilane, trimethymethoxysilane, phenyltrimethoxysilane, diphenyldimethoxysilane, cyclohexylmethyldimethoxysilane, 1,2-bis(trimethoxysilyl)ethane, 1,2-bis(triethoxysilyl)ethane, n-propyltrimethoxysilane, n-butyltrimethoxysilane, isobutyltrimethoxysilane, isobutyltriethoxysilane, n-hexyltrimethoxysilane, n-hexyltriethoxysilane, n-octyltriethoxysilane, n-decyltrimethoxysilane, 1,6-bistrimethoxysilane, 3-ureidopropyltriethoxysilane, bis[3-(diethoxymethylsilyl)propyl]carbonate, trifluoropropyltrimethoxysilane, perfluorooctylethyltriethoxysilane, γ-chloropropyltrimethoxysilane, vinyltri(β-methoxyethoxy)silane, allyltrimethoxysilane, γ-acryloxypropyltrimethoxysilane, γ-acryloxypropyltriethoxysilane, γ-methacryloxypropyltrimethoxysilane, γ-methacryloxypropyltriethoxysilane, γ-methacryloxypropyldimethoxymethylsilane, γ-mercaptopropyltrialkoxysilane, γ-aminopropyltrimethoxysilane, γ-aminopropyltriethoxysilane, N-phenyl-γ-aminopropyltrimethoxysilane, N-2(aminoethyl)3-aminopropyltriethoxysilane, N-2(aminoethyl)3-aminopropyltrimethoxysilane, N-2(aminoethyl)3-aminopropylmethyldimethoxysilane, p-styryltrimethoxysilane, and 3-isocyanatepropyltriethoxysilane, or of which the hydrolyzable groups are partly or wholly hydrolyzed or partly condensed.

Among the above compounds according to the invention, the organosilicon compound for further improving the adhesion and crosslinking property to the plastic optical substrate is, preferably, γ-glycidoxypropyltrimethoxysilane, γ-glycidoxypropylmethyldimethoxysilane or bis[3-(diethoxymethylsilyl)propyl]carbonate.

As the organosilicon compound for forming a dense hard coating and for further improving the scratch resistance of the plastic optical substrate, further, there can be preferably used the organosilicon compound having four hydrolyzable alkoxy groups such as the tetraethoxysilane or the tetramethoxysilane, the dimer to tetramer of the tetraethoxysilane or the tetramethoxysilane (in the case of the tetramer, each molecule has 10 alkoxy groups), the methyltriethoxysilane, 1,2-bis(trimethoxysilyl)ethane, 1,2-bis(triethoxysilyl)ethane or the like.

The organosilicon compounds may be used in only one kind or in two or more kinds in combination. Specifically, it is desired to use a compound exemplified as a preferred organosilicon compound for improving the adhesion and the crosslinking property in combination with a compound exemplified as a preferred organosilicon compound for improving the scratch resistance. In this case, in order to enhance the effect of using the cyclic ketone compound and to form the hard coating that exhibits further excellent properties, it is desired to use the organosilicon compound that effectively improves the crosslinking property in an amount 2.0 to 7.0 mass times as large as that of the organosilicon compound that effectively improves the scratch resistance.

In the invention, to prevent the hard coating from cracking and to prevent a decrease in the storage stability of the coating composition, the hydrolyzable organosilicon compound (B) is used in an amount of, preferably, 40 to 90 parts by mass and, more preferably, 40 to 85 parts by mass per 100 parts by mass of the total of the above fine inorganic oxide particle (A) and the hydrolyzable organosilicon compound (B). The ratio of blending the hydrolyzable organosilicon compound stands for the amount of blending in the state of not being hydrolyzed. Therefore, the amount of the solid component comprising the fine inorganic oxide particle (A) and the hydrolyzed product of the hydrolyzable organosilicon compound (B) is 15 to 50% by mass and, preferably, 20 to 40% by mass in the whole mass of the coating composition.

<(C) Water>

In the coating composition of the invention, the hydrolyzable organosilicon compound (alkoxysilane compound) is hydrolyzed, the hydrolyzed product is polymerized and cured (polycondensed) in a form of taking the fine inorganic oxide particle therein to form a cured body that serves as the matrix, and a hard coating is formed from the matrix in which the fine inorganic oxide particle is dispersed densely. Here, water must be added to promote the hydrolysis of the hydrolyzable organosilicon compound for forming the cured body.

The water is used in an amount of 20 to 70 parts by mass, preferably, 20 to 65 parts by mass and, more preferably, 20 to 60 parts by mass per 100 parts by mass of the total of the fine inorganic oxide particle (A) and the hydrolyzable organosilicon compound (B). If the amount of water is small, hydrolysis of the alkoxy group contained in the hydrolyzable organosilicon compound does not sufficiently proceed and may cause a decrease in the properties such as the hardness of the obtained hard coating or the storage stability of the coating agent. If water is used in amounts larger than the required amount, on the other hand, it may become difficult to form the hard coating having a uniform thickness adversely affecting the optical properties of the optical substrate on which the hard coating is formed. Here, the amount of water that is blended is the one in a state where the hydrolyzable organosilicon compound (B) has not been hydrolyzed.

Further, the water used here may be added in the form of an acid aqueous solution to promote the hydrolysis of the hydrolyzable organosilicon compound (B). For example, an inorganic acid such as hydrochloric acid, sulfuric acid, nitric acid or phosphoric acid or an organic acid such as acetic acid or propionic acid can be added in the form of an aqueous solution. Among them, the hydrochloric acid and acetic acid are favorably used from the standpoint of storage stability and hydrolyzing property of the coating composition. Further, the concentration of the acid aqueous solution is, preferably, 0.001 to 0.5N and, particularly, 0.01 to 0.1N.

As described already, the fine inorganic oxide particle (A) is often used in the form of an aqueous dispersion (sol) being dispersed in water. In this case, the amount of water present in the coating composition inclusive of the amount of water contained in the aqueous dispersion of the fine inorganic oxide particle is so adjusted to lie in the above-mentioned range. For example, when the amount of water contained in the aqueous dispersion of the fine inorganic oxide particle satisfies the above-mentioned range of the amount of water, there is no need of adding water any more. When the amount of water is less than the above-mentioned range, on the other hand, water must be further added.

<(D) Curing catalyst>

The curing catalyst is used for promoting the polymerization and curing of the hydrolyzed product of the hydrolyzable organosilicon compound (B), and may be the known one such as acetylacetonato complex, perchlorate, organometal salt or various Lewis acids which may be used in one kind or in two or more kinds in combination.

As the acetylacetonato complex, there can be, for example, in JP-A-11-119001 or, concretely, aluminum acetylacetonato, lithium acetylacetonato, indium acetylacetonato, chromium acetylacetonato, nickel acetylacetonato, titanium acetylacetonato, iron acetylacetonato, zinc acetylacetonato, cobalt acetylacetonato, copper acetylacetonato and zirconium acetylacetonato.

Among them, aluminum acetylacetonato and titanium acetylacetonato are preferred.

As the perchlorate, there can be exemplified magnesium perchlorate, aluminum perchlorate, zinc perchlorate and ammonium perchlorate.

As the organometal salt, there can be exemplified sodium acetate, zinc naphthenate, cobalt naphthenate and zinc octylate.

As the Lewis acid, there can be exemplified stannic chloride, aluminum chloride, ferric chloride, titanium chloride, zinc chloride and antimony chloride.

According to the present invention, the acetylacetonato complex and the perchlorate are particularly desired from the standpoint of obtaining a hard coating having a large scratch resistance even at a relatively low temperature in a short period of time. It is desired that not less than 50% by mass, particularly, not less than 70% by mass and, most desirably, the whole amount of the curing catalyst is the acetylacetonato complex or the perchlorate.

It is desired that the above curing catalyst is used in an amount in a range of 0.90 to 5.00 parts by mass and, specifically, 1.00 to 4.00 parts by mass per 100 parts by mass of the total of the fine inorganic oxide particle (A) and the hydrolyzable organosilicon compound (B) from the standpoint of obtaining a hardly cured coating. Here, the amount of blending the curing catalyst is the one in a state where the hydrolyzable organosilicon (B) has not been hydrolyzed.

<(E) Organic solvents>

The organic solvent is the one that serves as a solvent for the hydrolyzable organosilicon compound (B) and as a dispersion medium for the fine inorganic oxide particle (A), and any known organic solvent can be used if it has the above functions and is volatile. Concrete examples of the organic solvent include alcohols such as methanol, ethanol, propanol, isopropanol, t-butyl alcohol, 2-butanol and diacetone alcohol; lower alcohol esters of lower carboxylic acid such as methyl acetate, ethyl acetate and propyl acetate; ethers such as cellosolve, dioxane and ethylene glycol monoisopropyl ether; ketones such as acetone, methyl ethyl ketone, methylisobutyl ketone and acetylacetone; halogenated hydrocarbons such as methylene chloride; and aromatic hydrocarbons such as benzene, toluene and xylene.

These organic solvents can be used in one kind or in two or more kinds being mixed together. Among these organic solvents, it is desired to use, specifically, methanol, isopropanol, t-butyl alcohol, diacetone alcohol, ethylene glycol monoisopropyl ether or acetyl acetone from the standpoint of having compatibility with water that is arbitrarily added and easily vaporizing when the coating composition is applied and is cured, enabling a smooth hard coating to be formed. As described earlier, further, the organic solvent may be partly mixed in advance with the fine inorganic oxide particle as a dispersion medium of the fine inorganic oxide particle.

Though there is no particular limitation on the amount of the organic solvent that is used, the organic solvent as a whole is used in an amount in a range of, preferably, 100 to 200 parts by mass and, more preferably, 100 to 150 parts by mass per 100 parts by mass of the total of the fine inorganic oxide particle (A) and the hydrolyzable organosilicon compound (B) from the standpoint of obtaining storage stability and a large scratch resistance. Here, the amount of blending the organic solvent is the one in a state where the hydrolyzable organosilicon compound (B) has not been hydrolyzed, and does not include the organic solvent that is formed by the hydrolysis of the hydrolyzable organosilicon compound.

<(F) Cyclic ketone>

The present invention uses the cyclic ketone in addition to the above components (A) to (E). As described earlier, the cyclic ketone has a high boiling point and a small vapor pressure. It is, therefore, speculated that the cyclic ketone is not volatilized by the heating at the time of curing but partly remains in the hard coating enabling the hard coating to highly follow up the plastic substrate and, hence, preventing the occurrence of cracks in the hard coating caused by the thermal hysteresis (difference in the coefficient of thermal expansion between the hard coating and the substrate). The cyclic ketone, further, exhibits a high degree of affinity to the plastic material forming the substrate on which the hard coating is formed and, therefore, exhibits a function for swelling the surface of the plastic optical substrate at the time of curing, presumably, contributing to greatly increasing the close adhesion between the hard coating and

the plastic optical substrate. With the adhering property being improved, it is considered that the hard coating also exhibits improved resistance against hot water, and the adhering property does not so decrease even if it comes in contact with hot water.

There is no particular limitation on the cyclic ketone if it can be dissolved in the above-mentioned organic solvent, but it is desired to use a compound that has elements in a number of 3 to 15 to constitute a ring. The elements for constituting the ring may include oxygen atoms or nitrogen atoms in addition to carbon atoms. In particular, the cyclic ketone containing oxygen atoms or nitrogen atoms as elements for constituting the ring (hereinafter often a hetero atom-containing cyclic ketone) exhibits the above-mentioned effect despite its ratio of blending is decreased and, therefore, can be favorably used. On the other hand, the cyclic ketone containing carbon atoms only as elements for constituting the ring (hereinafter often a carbon cyclic ketone) helps maintain a large scratch resistance of the formed hard coating in a range of the blending ratio that will be described below in detail, and permits little change in the properties of the coating composition in spite of a difference in the composition and offers an advantage in the production.

Representative examples of the cyclic ketone include N-methylpyrrolidone, ε-caprolactam, γ-butylolactone, 2-pyrrolidone and 1-vinyl-2-pyrrolidone as the hetero atom-containing cyclic ketone. Among them, the N-methylpyrrolidone is desirably used from such a standpoint that it has a high degree of affinity to the optical substrate made of, particularly a plastic material even if it is added in a small amount and helps greatly improve the close adhesion between the hard coating and the plastic optical substrate.

As the carbon cyclic ketone, further, there can be exemplified isophorone, cyclohexanone and methylcyclohexanone. For favorably obtaining the above effect, the cyclohexanone is preferred.

As will be understood from the above description, the cyclic ketone has a high boiling point and is used for being partly left in the hard coating but is not used as an organic solvent. Therefore, the cyclic ketone (hetero atom-containing cyclic ketone and carbon cyclic keton) is used in an amount smaller than that of the organic solvent used as a dispersion medium. Concretely, the cyclic ketone should be used in an amount of 0.10 to 30.00 part by mass and, preferably, 0.10 to 15.00 parts by mass per 100 parts by mass of the total of the fine inorganic oxide particle (A) and the hydrolyzable organosilicon compound (B). Here, the amount of the cycic ketone that is used is the one in a state where the hydrolyzable organosilicon compound (B) has not been hydrolyzed. If the amount of use thereof is smaller than the above range, not only the adhesion between the hard coating and the plastic optical substrate decreases but also it becomes difficult to prevent the occurrence of cracks in the hard coating. If the cyclic ketone is used in amounts larger than the above range, then the amount of the cyclic ketone remaining in the hard coating becomes too great and basic properties required for the hard coating such as scratch resistance and weather-proof property are lost. Here, of the cyclic ketones, the hetero atom-containing cyclic ketone exhibits the above effect even if it is used in relatively small amounts while the carbon cyclic ketone works to highly maintain the scratch resistance of the hard coating if it is used in an amount as described above. Therefore, the hetero atom-containing cyclic ketone and the carbon cyclic ketone have different optimum ratios in their amounts of use.

Next, the amounts of use will be described.

(Optimum blending amount of the hetero atom-containing cyclic ketone)

The hetero atom-containing cyclic ketone exhibits the effect of the invention even if it is used in small amounts within the above blending ratios. Therefore, the amount of use thereof is, preferably, 0.10 to 15.00 parts by mass, more preferably, 0.10 to 10.00 parts by mass and, further preferably, 0.10 to 8.00 parts by mass per 100 parts by mass of the total of the fine inorganic oxide particle (A) and the hydrolyzable organosilicon compound (B). If the amount of use thereof exceeds 15.00 parts by mass, the scratch resistance tends to decrease. On the other hand, if the amount of use thereof is less than 0.10 parts by mass, the adhesion between the hard coating and the plastic optical substrate tends to decrease.

Further, as will be described below, the plastic optical substrate (photochromic optical substrate) containing a photochromic compound contains a hindered amine-type weather-proofing agent for weather-proof property and in which the photochromic compound exhibits its effect (molecular motion). Therefore, a plastic optical substrate having much free space is used. In this case, the weather-proofing agent tends to migrate toward the surface of the plastic optical substrate to often affect the formation of the hard coating. The photochromic optical substrate can be divided into a photochromic optical substrate obtained by the in-mass method and a photochromic optical substrate obtained by the coating method.

The plastic optical substrate (photochromic optical substrate obtained by the in-mass method) is obtained by just curing a polymerization-curable composition containing a photochromic compound and a polymerizable monomer, and is, usually, produced by blending not less than 0. 005 parts by mass but not more than 1.00 part by mass of the photochromic compound and not less than 0.01 part by mass but not more than 2.00 parts by mass of the weather-proofing agent per 100 parts by mass of the polymerizable monomer. On the other hand, the optical substrate having a photochromic coating (photochromic optical substrate obtained by the coating method) is obtained by applying a polymerization-curable

composition containing a photochromic compound and a polymerizable monomer onto a plastic optical substrate and by curing the polymerization-curable compostion, and is, usually, produced by blending more than 1.00 part by mass but not more than 10.00 parts by mass of the photochromic compound and more than 2.00 parts by mass but not more than 15.00 parts by mass of the weather-proofing agent per 100 parts by mass of the polymerizable monomer.

When the hard coating is to be formed on the photochromic optical substrate, the scratch resistance tends to decrease if the amount of use of the hetero atom-containing cyclic ketone increases, and the adhesiveness tends to decrease if the amount of use thereof decreases. When the hard coating is to be formed on the plastic optical substrate that contains the photochromic compound, therefore, the hetero atom-containing cyclic ketone is used in an amount of, desirably, 0.10 to 5.00 parts by mass, more preferably, 0.10 to 2.80 parts by mass and, specifically, 0.20 to 2.50 parts by mass.

As described above, the hetero atom-containing cyclic ketone is not used as an organic solvent (dispersion medium). In order for the formed hard coating to maintain excellent scratch resistance while satisfying the above range, therefore, the hetero atom-containing cyclic ketone is used in an amount of, preferably, not more than 2.50 parts by mass and, more preferably, not more than 2.00 parts by mass per 100 parts by mass of the total of the water (C) and the organic solvent (E). It is, therefore, desired to use the N-methylpyrrolidone that exhibits excellent effect even if it is used in small amounts. Here, the organic solvent (E) does not include the organic solvent that is formed by the hydrolysis of the hydrolizable organosilicon compound (B).

<Optimum blending amount of the carbon cyclic ketone>

The carbon cyclic ketone makes it possible to highly maintain the scratch resistance of the formed hard coating even if it is used at a large ratio within the above blending ratios. Therefore, the amount of use thereof is, preferably, 0.50 to 30.00 parts by mass per 100 parts by mass of the total of the fine inorganic oxide particle (A) and the hydrolyzable organosilicon compound (B). However, if the effect relative to the amount of use is taken into account, the amount of use thereof is, more preferably, 0.50 to 15.00 parts by mass.

Though the reason is not clear, the scratch resistance of the formed hard coating is not deteriorated even if the carbon cyclic ketone is used in an increased amount as compared to the hetero atom-containing cyclic ketone. Therefore, the carbon cyclic ketone can be preferably used when the hard coating is to be formed on the photochromic optical substrate. That is, as described above, the weather-proofing agent in the photochromic optical substrate easily migrates toward the surface thereof to affect the formation of the hard coating. However, the coating composition containing the carbon cyclic ketone is little affected by the weather-proofing agent, and forms the hard coating having excellent scratch resistance. Therefore, when the hard coating is to be formed on the photochromic optical substrate, too, the carbon cyclic ketone is used in an amount of, preferably, 0.50 to 30.00 parts by mass, more preferably, 1.50 to 30.00 parts by mass and, further preferably, 5.00 to 30.00 parts by mass per 100 parts by mass of the total of the fine inorganic oxide particle (A) and the hydrolyzable organosilicon compound (B). However, if the effect relative to the amount of use is taken into account, the amount of use thereof is, more preferably, 1.50 to 15.00 parts by mass and, further preferably, 5.00 to 15.00 parts by mass.

As described above, further, the carbon cyclic ketone is not used as an organic solvent (dispersion medium), either. In order for the formed hard coating to maintain excellent scratch resistance while satisfying the above range, therefore, the carbon cyclic ketone is used in an amount of, preferably, not more than 17.0 parts by mass, more preferably, not more than 15.0 parts by mass and, specifically, not more than 10.0 parts by mass per 100 parts by mass of the total of the water (C) and the organic solvent (E).

<Other additives>

The coating composition of the invention can be blended with any known additives in addition to the above various components.

The coating agent composition of the invention can be blended with any known additives unless they do not hinder the object of the invention. As such additives, there can be exemplified surfactant, antioxidant, radical-trapping agent, ultraviolet ray stabilizer, ultraviolet ray absorber, parting agent, coloring-preventing agent, antistatic agent, fluorescent dye, dye, pigment, perfume and plasticizer.

As the surfactant, for example, there can be used any one of the nonionic type, anionic type or cationic type. From the viewpoint of wettability on the plastic lens material, however, it is desired to use the nonionic type surfactant. Concrete examples of the nonionic type surfactant that can be preferably used include sorbitan fatty acid ester, glycerin fatty acid ester, decaglycerin fatty acid ester, propylene glycol · pentaerythritol fatty acid ester, polyoxyethylenesorbitan fatty acid ester, polyoxyethylenesorbit fatty acid ester, polyoxyethylene glycerin fatty acid ester, polyethylene glycol fatty acid ester, polyoxyethylenealkyl ether, polyoxyethylenephytosterol · phytostanol, polyoxyethylenepolyoxypropylenealkyl ether, polyoxyethylenealkylphenyl ether, polyoxyethylene castor oil · cured castor oil, polyoxyethylenelanolin · lanolin

alcohol · bees wax derivative, polyoxyethylenealkylamine · fatty acid amide, polyoxyethylenealkylphenylformaldehyde condensation product and single-chain polyoxyethylenealkyl ether.

The surfactants may be used in two or more kinds being mixed together. The surfactant is added in an amount in a range of, desirably, 0.001 to 1 part by mass per 100 parts by mass of the total of the above-mentioned essential components (total amount of the fine inorganic oxide particle (A) and the hydrolyzable organosilicon compound (B)).

As the antioxidant, radical-trapping agent, ultraviolet ray stabilizer and ultraviolet ray absorber, further, there can be preferably used hindered phenol antioxidant, phenol type radical-trapping agent, sulfur type antioxidant, benzotriazole type compound and benzophenone type compound. These blending agents are added in amounts in a range of, preferably, 0.1 to 20 parts by mass per 100 parts by mass of the total amount of the above essential components (total amount of the fine inorganic oxide particle (A) and the hydrolyzable organosilicon compound (B)).

The dye and pigment are used for coloring, and their examples include nitroso dye, nitro dye, azo dye, stilbenzoazo dye, keto imine dye, triphenylmethane dye, xanthene dye, acridine dye, quinoline dye, methine dye, polymethine dye, thiazole dye, indamine dye, indophenol dye, azine dye, oxazine dye, thiazine dye, sulfur dye, amino ketone dye, oxyketone dye, anthraquinone dye, perinone dye, indigoid dye, phthalocyanine dye, azo pigment, anthraquinone pigment, phthalocyanine pigment, naphthalocyanine pigment, quinacridone pigment, dioxazine pigment, indigoid pigment, triphenylmethane pigment and xanthene pigment. Use of the dye and pigment is suitably determined depending upon the concentration of color of the substrate that is to be colored.

<Preparation of a coating composition>

The coating composition of the invention can be prepared by weighing and mixing the components in predetermined amounts.

There is no limitation on the order of adding the components, that is, the components may all be added simultaneously, or the hydrolyzable organosilicon compound (B) may be mixed in advance into an acid aqueous solution so as to be at least partly hydrolyzed or condensed and other components may be mixed therein. In this case, the hydrolysis is conducted, desirably, at a temperature of 10 to 40˚C so will not to adversely affect the properties of the hard coating and so will not to deteriorate the storage stability.

Preparation of the coating composition is continued until the hydrolyzable groups of the hydrolyzable organosilicon compound (B) are all hydrolyzed. The end of hydrolysis of the hydrolyzable organosilicon compound (B) can be confirmed by measuring the amount of the organic solvent in the obtained coating composition by gas chromatography and making sure that there is no change in the amount of the organic solvent formed from the hydrolyzable organosilicon compound that is used and that the amount is in agreement with the calculated amount of the organic solvent.

<Use>

The thus prepared coating composition of the present invention is, as required, filtered to remove foreign matters and is, thereafter, applied onto the surface of the plastic optical substrate such as a plastic lens, dried and is cured to form a hard coating.

The coating composition can be applied by a dipping method, spin-coating method, dip-spin-coating method or spray method, or can be applied by using a brush or a roller.

After having been applied, the coating composition is, first, pre-cured at 60 to 80˚C for about 5 to about 30 minutes and is, thereafter, cured at a temperature of 90˚C to 120˚C for about 1 to about 3 hours though dependent upon the substrates. Since the coating composition of the invention exhibits excellent adhesiveness, the temperature after the pre-curing can be set to be relatively low. Concretely, the temperature after the pre-curing can be set to be 95 to 115˚C and, further, 100 to 110˚C. Since the coating composition can be cured at such a relatively low temperature, there is no probability of causing the plastic lens to develop yellow color.

The thus formed hard coating may have a thickness of about 0.1 to about 10 μm and may, usually, have a thickness of, desirably, 1 to 5 μm for the spectacle lenses.

The coating composition of the invention not only gives a hard coating having hardness and scratch resistance equal to or superior to those of when a conventional liquid for hard coating is used but also effectively prevents the occurrence of cracks in the hard coating stemming from the thermal hysteresis such as during the curing. Besides, the hard coating by itself excellently adheres to the plastic optical substrate and exhibits sufficient degree of adhesion even through only a general chemical treatment by using an alkali solution. As a result, the resistance against hot water is improved and a decrease in the adhesion is prevented even if the hard coating is brought into contact with hot water.

In particular, the hard coating poorly adheres to the optical substrate which comprises a (meth)acrylic resin. So far, therefore, the surface of the optical substrate was often subjected to the physical treatment (polishing treatment, corona discharge treatment, plasma discharge treatment, UV ozone treatment) or to the treatment with a primer in addition to the treatment with alkali. However, use of the coating composition of the present invention makes it possible

to simplify the above operation. To obtain a high degree of adhesion, further, the hard coating on the optical substrate was often cured at a temperature of higher than 120˚C. However the coating composition of the present invention can be cured at a relatively low temperature, and the optical substrate is prevented from developing yellow color that is caused by the treatment at a high temperature.

<Optical substrates>

The coating composition of the present invention can be applied to forming a hard coating on the surfaces of plastic optical substrates such as spectacle lenses, lenses of a camera, liquid crystal displays and windows of houses and automobiles, and can be, particularly preferably, used for the spectacle lenses.

There is no limitation on the kinds of the plastic materials for forming optical substrates, and the coating composition of the invention can be applied without any limitation to forming the hard coating on the surfaces of the optical substrates comprising any known resins, such as (meth)acrylic resin, polycarbonate resin, allyl resin, thiourethane resin, urethane resin and thioepoxy resin.

The coating composition of the present invention closely adheres to, specifically, the (meth)acrylic resin. Therefore, the coating composition of the invention can be favorably used for forming a hard coating on the optical substrate comprising the (meth) acrylic resin that contains a photochromic compound. Specifically, the coating composition of the invention can be preferably used for forming a hard coating on the optical substrate (photochromic optical substrate) comprising the (meth)acrylic resin that has much free space and contains a photochromic compound and a hindered amine type weather-proofing agent that affects the formation of the hard coating. The (meth)acrylic resin having much free space is desirably a (meth)acrylic resin obtained by curing a composition which contains a polyfunctional acrylate having a trifunctional or more highly functional (meth)acrylate group and a di(meth)acrylate having an alkylene glycol chain with 2 to 15 recurring units.

Concrete examples of the polyfunctional acrylate having a trifunctional or more highly functional (meth)acrylate group include trimethylolpropane trimethacrylate, trimethylolpropane triacrylate, tetramethylolmethane trimethacrylate and tetramethylolmethane triacrylate.

Further, as the di(meth)acrylate having an alkylene glycol chain with 2 to 15 recurring units, there can be exemplified polyethylene glycol dimethacrylate having an average molecular weight of 536, polytetramethylene glycol dimethacrylate having an average molecular weight of 736, polypropylene glycol dimethacrylate having an average molecular weight of 536, polyethylene glycol diacrylate having an average molecular weight of 258, polyethylene glycol diacrylate having an average molecular weight of 308, polyethylene glycol diacrylate having an average molecular weight of 522, polyethylene glycol methacrylate acrylate having an average molecular weight of 272, polyethylene glycol methacrylate acrylate having an average molecular weight of 536, 2,2-bis[4-(methacryloxy · polyethoxy)phenyl]propane, 2,2-bis [4-(acryloxy · diethoxy)phenyl]propane and 2,2-bis[4-(acryloxy · polyethoxy)phenyl]propane.

To the composition containing the polyfunctional acrylate having a trifunctional or more highly functional (meth) acrylate group and the di(meth)acrylate having an alkylene glycol chain with 2 to 15 recurring units, further, there may be added other polymerizable monomers such as (meth)acrylates like glycidyl methacrylate and urethane acrylate.

The above plastic optical substrate (photochromic optical substrate) containing the photochromic compound may be the one in which the photochromic compound is dispersed in the substrate, or may be the one having a photochromic layer in which photochromic compound is dispersed on the surface of the substrate.

More concretely, the coating composition of the invention can be favorably used for forming the hard coating on a photochromic lens obtained by the in-mass method from the polymerization-curable composition that contains the (meth) acrylic monomer and the photochromic compound. The coating composition of the invention can be, further, favorably used for forming the hard coating on the surface of the plastic optical substrate having the photochromic layer formed thereon by applying the polymerization-curable composition containing the (meth)acrylate monomer and the photochromic compound onto the surface of the plastic optical substrate followed by curing.

The photochromic layer, usually, contains much photochromic compound often causing the plastic optical substrate to exhibit decreased weather-proof property (to exhibit yellow color after used for extended periods of time). However, the weather-proofing property is improved by forming the hard coating comprising the coating composition of the invention on the photochromic layer.

EXAMPLES

The invention will now be described by way of Examples and Comparative Examples to which only, however, the invention is in no way limited.

The optical substrates (lens materials) and the components used in Examples and in Comparative Examples were as described below.

(1) Optical substrates (lens materials).

CR: allyl resin plastic lens, refractive index = 1.50.
MRA: thiourethane resin plastic lens, refractive index = 1.60.
MRB: thiourethane resin plastic lens, refractive index = 1.67.
TE: thioepoxy resin plastic lens, refractive index = 1.71.
AC1: methacrylic resin plastic lens, refractive index = 1.50.
AC2: lens having a coating layer of a methacrylic resin on the surface of the plastic lens material.

[Preparation of the photochromic optical substrate AC1: by the in-mass method]

A polymerization-curable composition was prepared according to the following recipe.

Recipe of the polymerization-curable composition:

| | |
|---|---|
| Polypropylene glycol dimethacrylate having an average molecular weight of 328 | 43 parts by mass, |
| Trimethylolpropane trimethacrylate | 10 parts by mass, |
| Methoxypolyethylene glycol methacrylate having an average molecular weight of 394 | 5 parts by mass, |
| Polyethylene glycol diacrylate having an average molecular weight of 522 | 16 parts by mass, |
| Glycidyl methacrylate | 1 part by mass, |
| α-methylstyrene dimer urethane acrylate (EBECRY4858 producedby Dycel Kagaku | 1 part by mass, |
| Kogyo Co.) | 25 parts by mass. |

To 100 parts by mass of the polymerization-curable composition prepared above, there were added:

| | |
|---|---|
| bis(1,2,2,6,6-pentamethyl-4-piperidyl)sebacate | 0.1 part by mass, |
| photochromic compound (1) of the following formula | 0.03 parts by mass, |
| and, as radical polymerization initiators t-butylperoxyneodecanate | 1.0 part by mass, |
| and 2,2'-azobis(2,4-dimethylvaleronitrile) | 0.1 part by mass, |

and the mixture was mixed well to prepare a photochromic polymerization-curable composition.

[Chemical 1]

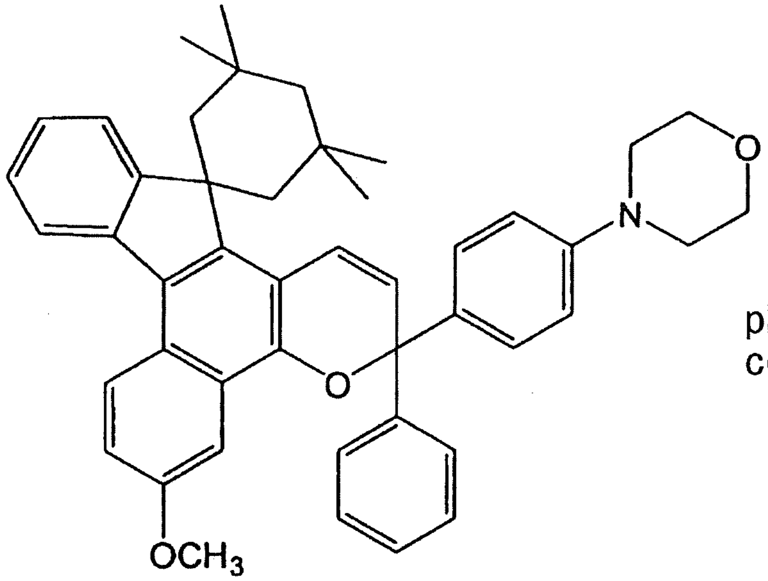

photochromic compound 1

Next, the obtained composition was poured into a mold constituted by glass plates and a gasket made from an ethylene/vinyl acetate copolymer, and was cast-polymerized. The polymerization was conducted by using an air furnace while gradually elevating the temperature from 33°C to 90°C over 17 hours and, thereafter, maintaining the temperature of 90°C for 2 hours. After the polymerization has been finished, the mold was taken out from the air furnace, left to cool, and the cured body was taken out from the mold of glass. Thereafter, the cured body was introduced into an oven and was heated at 110°C for 3 hours to obtain a photochromic optical substrate AC1.

[Preparation of the photochromic optical substrate AC2: by the coating method]

A mixture of radically polymerizable monomers was prepared according to the following recipe.

| | |
|---|---|
| 2,2-bis(4-acryloyloxypolyethylene glycol phenyl)propane(average molecular weight of 776) | 40 parts by mass, |
| polyethylene glycol diacrylate (average molecular weight of 532) | 15 parts by mass, |

| | |
|---|---|
| trimethylolpropane trimethacrylate | 25 parts by mass, |
| polyester oligomer hexaacrylate | 10 parts by mass, |
| glycidyl methacrylate | 10 parts by mass. |

To 100 parts by mass of the mixture of the radically polymerizable monomers, there were added:

photochromic compound (2) of the following formula 3 parts by mass,

and the mixture was dissolved by ultrasonic waves at 70°C for 30 minutes.

[Chemical 2]

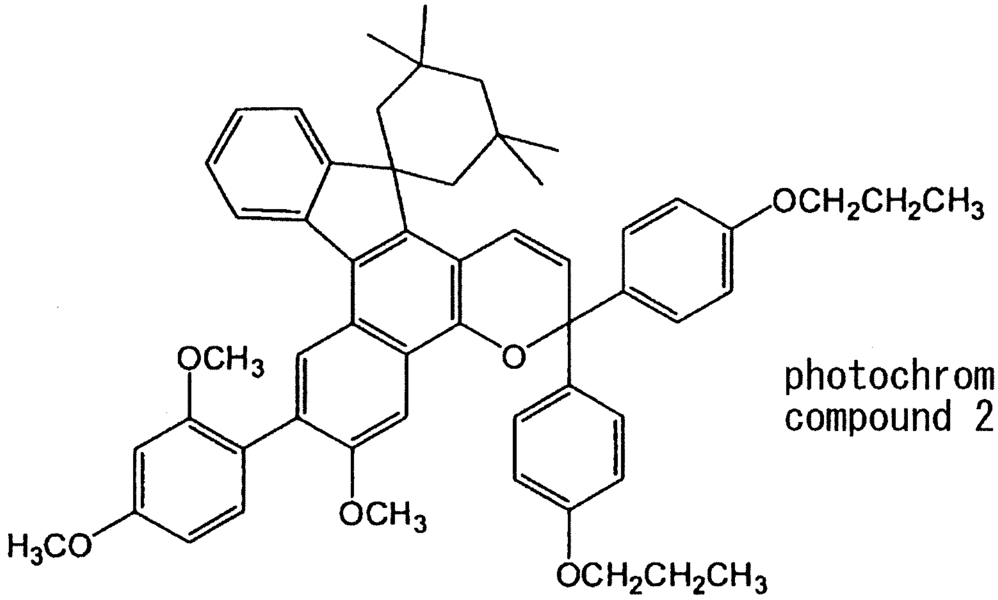

photochromic compound 2

Thereafter, to the obtained composition, there were added, as a polymerization initiator:

| | |
|---|---|
| CGI1870: a mixture of 1-hydroxycyclohexylphenylketone and bis(2,6-dimethoxybenzoyl)-2,4,4-(weight ratio, 3:7) trimethylpentylphosphinoxide | 0.35 parts by weight, |
| as stabilizers: | |
| bis(1,2,2,6,6-pentamethyl-4-piperidyl)sebacate | 5 parts by mass, and |
| triethylene glycol-bis[3-(3-t-butyl-5-methyl-4- hydroxyphenyl)propionate | 3 parts by mass, |
| as a silane coupling agent: | |
| γ-methacryloyloxypropyltrimethoxysilane | 7 parts by mass, |
| and as a leveling agent: | |
| silicone surfactant, L-7001, produced by Toray-Dow Coning Co., | 0.1 part by mass, |

and the mixture was sufficiently mixed together to prepare a photochromic polymerization-curable composition.

The MRA (thiourethane resin plastic lens, refractive index = 1.60) was used as the plastic optical substrate, degreased with acetone to a sufficient degree, treated in an aqueous solution of 5% of sodium hydroxide maintained at 50˚C for 4 minutes, washed with flushing water for 4 minutes, washed with distilled water maintained at 40˚C for 4 minutes, and was dried at 70˚C.

Next, a primer coating solution was prepared by mixing a moisture-curable primer "TAKESEAL PFR402TP-4" produced by Takebayashi Kagaku Kogyo Co. and ethyl acetate in a manner that their amounts were each 50 parts by mass and to which was, further, added 0.03 parts by mass of a leveling agent, FZ-2104, produced by Toray-Dow Coning Co. The mixture was sufficiently stirred in a nitrogen atmosphere until a homogeneous solution was obtained.

By using a spin coater, 1H-DX2, produced by MIKASA Co., the primer solution was applied onto the surface of the lens B by spin-coating. The lens was left to stand at room temperature for 15 minutes to prepare a lens material having a primer layer of a thickness of 7 μm.

Next, about 1 g of the above photochromic polymerization-curable composition was applied by spin-coating onto the surface of the lens material having the primer layer. By using F3000SQ mounting the D-valve produced by Fusion UV Systems Co. of which the output at 405 nm has been adjusted to be 150 mW/cm$^2$ on the lens surface, the lens of which the surface has been coated with the photochromic polymerization-curable composition was irradiated with light for 3 minutes in a nitrogen atmosphere to cure the coating. Thereafter, the heat treatment was conducted in a constant-temperature oven maintained at 110˚C for 1 hour to form a photochromic layer. The thickness of the obtained photochromic coating could be adjusted depending upon the conditions of spin-coating. The thickness of the photochromic layer was adjusted to be 40 ± 1 μm.

(2) Components for the coating composition.

[Component A: Fine inorganic oxide particles]

SOL1: Fine silica particle dispersed in water (Snowtex 0-40 produced by Nissan Kagaku Kogyo Co., solid component concentration (concentration of fine silica particle); 40% by mass).

SOL2: Sol of fine composite metal oxide particle dispersed in methanol (containing 11.7% by mass of zirconium oxide, 77. 6% by mass of tin oxide, 7.0% by mass of antimony oxide and 3.7% by mass of silicon dioxide), solid component concentration (concentration of fine composite metal oxide particle), 40% by mass.

SOL3: Sol of fine composite inorganic oxide particle dispersed in methanol (containing 12.0% by mass of tin oxide, 61.3% by mass of titanium oxide, 14.3% by mass of zirconium oxide and 12.3% by mass of silicon dioxide), solid component concentration (concentration of fine composite inorganic oxide particle), 30% by mass.

SOL4: Fine cerium oxide particle dispersed in water (Niedral U-15 produced by Tagi Kagaku Co., solid component; 15% by mass, acetic acid; 2% by mass, water; 83% by mass).

SOL5: Fine antimony pentoxide particle dispersed in methanol (Suncolloid AMT-332S · NV produced by Nissan Kagaku Kogyo Co., solid component concentration (concentration of fine antimony pentoxide particle; 30% by mass).

[Component B: Hydrolyzable group-containing organosilicon compounds]

GTS: γ-Glycidoxypropyltrimethoxysilane
TEOS: Tetraethoxysilane
NSK: Bis[3-(methyldiethoxysilyl)propyl]carbonate
GDS: γ-Glycidoxypropylmethyldimethoxysilane
BSE: 1,2-Bis(triethoxysilyl)ethane
SK: Tetramer of tetramethoxysilane

[Component C: Water]

Water or 0.001N to IN aqueous solution of hydrochloric acid.

[Component D: Curing catalysts]

Complex with aluminum as a central metal.

D1: Tris(2,4-pentanedionato)aluminum(III) Perchlorates.
D2: Ammonium perchlorate
D3: Magnesium perchlorate

[Component E: Organic solvents]

MeOH: Methanol

TBA: t-Butanol

DAA: Diacetone alcohol

EGiPrE: Ethylene glycol isopropyl ether

AcAc: Acetylacetone

[Component F: Cyclic ketone compounds]

NMP: N-methylpyrrolidone
CHX: Cyclohexanone
ECL: ε -Caprolactam
GBL: γ-Butylolactone
2PY: 2-Pyrrolidone
VPY: 1-Vinyl-2-pyrrolidone

[Component G: Silicone surfactant]

SiL1: Silicone surfactant
(L7001 produced by Toray-Dow Coning Co.)

Preparation of the coating compositions.

(Preparation of the coating composition 1)

| | |
|---|---|
| GTS (γ-glycidoxypropyltrimethoxysilane) | 57.46 parts by mass, |
| TEOS (tetraethoxysilane) | 22.65 parts by mass, |
| SiL1 (silicone surfactant) | 0.28 parts by mass, and |
| NMP (N-methylpyrrolidone) | 0.14 parts by mass, |

were mixed together.

While sufficiently stirring the above mixture, a mixed solution of:

| | |
|---|---|
| waterdispersed in water) | 24.70 parts by mass, and |
| SOL1 (fine silica particle | 49.73 parts by mass, |

was added thereto. After the addition has been finished, the stirring was continued at 15 to 20˚C for 12 to 24 hours.

Next, a mixed solution of:

| | |
|---|---|
| D1 (tris(2,4-pentanedionato)aluminum (III)) | 2.32 parts by mass, |
| EGiPrE (ethylene glycol isopropyl ether) | 9.39 parts by mass, |
| TBA (t-butylalcohol) | 55.25 parts by mass, |
| AcAc (acetylacetone) | 12.43 parts by mass, and |
| MeOH (methanol) | 41.88 parts by mass, |

was added thereto, and the mixture was stirred at 20 to 25˚C for 3 hours to prepare the coating composition 1.
The hydrolysis of GTS and TEOS was confirmed to have finished by gas chromatography.
The composition of blending was as shown in Table 1.

(Preparation of the coating compositions 2 to 14)

The coating compositions 2 to 14 were prepared in the same manner as the coating composition 1 but using

the component A (fine inorganic oxide particle), component B (hydrolyzable group-containing organosilicon compound), component C (water), component D (curing catalyst), component E (organic solvent), component F (cyclic ketone compound) and component G (silicone surfactant) according to the blending recipes shown in Tables 1 and 2.

(Preparation of the coating composition 15)

| | |
|---|---|
| GTS (γ-glycidoxypropyltrimethoxysilane) | 47.55 parts by mass, |
| BSE (1,2-bis(triethoxysilyl)ethane) | 7.90 parts by mass, |
| SiL1 (silicone surfactant) | 0.15 parts by mass, |
| DAA (diacetone alcohol) | 62.29 parts by mass, |
| TBA (t-butyl alcohol) | 18.83 parts by mass, and |
| NMP (N-methylpyrrolidone) | 0.14 parts by mass, |

were mixed together.

While sufficiently stirring the above mixture,

0.017N aqueous solution ofhydrochloric acid 39.85 parts by mass,

was added thereto. After the addition has been finished, the stirring was continued at 15 to 30˚C for 20 hours.

Next,

D1 (tris(2,4-pentanedionato)aluminum(III)) 2.99 parts by mass,

was added thereto followed by stirring at 20 to 25˚C for 1 hour, and,

SOL2 (fine composite metal oxide particle dispersed in methanol) 111.37 parts by mass,

(fine composite inorganic oxide particle; 44.55 parts by mass, methanol; 66.82 parts by mass),
was mixed thereto, and the mixture was stirred for 24 hours to obtain the coating composition 14 of the present invention.
The hydrolysis of GTS and BSE was confirmed to have finished by gas chromatography.
The compositions of blending were as shown in Table 2.

(Coating compositions 16 to 22)

The coating compositions 16 to 22 were prepared in the same manner as the coating composition 15 but using the component A (fine inorganic oxide particle), component B (hydrolyzable group-containing organosilicon compound), component C (water), component D (curing catalyst), component E (organic solvent), component F (cyclic ketone compound) and component G (silicone surfactant) according to the blending recipes shown in Tables 2 and 3.

(Preparation of the comparative compositions 1 to 6)

The comparative compositions 1 to 6 were prepared in the same manner as the coating composition 1 but using the component A (fine inorganic oxide particle), component B (hydrolyzable group-containing organosilicon compound), component C (water), component D (curing catalyst), component E (organic solvent), component F (cyclic ketone compound) and component G (silicone surfactant) according to the blending recipes shown in Table 3.

(Preparation of the comparative compositions 7 to 9)

The comparative compositions 7 to 9 were prepared in the same manner as the coating composition 15 but using the component A (fine inorganic oxide particle), component B (hydrolyzable group-containing organosilicon compound), component C (water), component D (curing catalyst), component E (organic solvent), component F (cyclic ketone compound) and component G (silicone surfactant) according to the blending recipes shown in Table 3.
The following solvents were used for the comparative compositions shown in Table 3.

DMSO: dimethylsulfoxide
DMF: dimethylformamide
DMAC: dimethylacetamide
AC: acetone

Table 1

| Coating composition No. | A pts. by mass* | B pts. by mass | C pts. by mass | D pts. by mass | E pts. by mass | F pts. by mass | G pts. by mass |
|---|---|---|---|---|---|---|---|
| Composition 1 | SOL1 | GTS/TEOS | water | D1 | EGiPrE/TBA/AcAc/MeOH | NMP | SiL1 |
| | 19.89 | 57.46/22.65 | 54.70 | 2.32 | 9.39/55.25/12.43/41.88 | 0.14 | 0.28 |
| Composition 2 | SOL1 | GTS/TEOS | water | D1 | EGiPrE/TBA/AcAc/MeOH | NMP | SiL1 |
| | 19.89 | 57.46/22.65 | 54.70 | 2.32 | 9.39/55.25/12.43/41.88 | 0.69 | 0.28 |
| Composition 3 | SOL1 | GTS/TEOS | water | D1 | EGiPrE/TBA/AcAc/MeOH | NMP | SiL1 |
| | 19.89 | 57.46/22.65 | 54.70 | 2.32 | 9.39/55.25/12.43/41.88 | 2.76 | 0.28 |
| Composition 4 | SOL1 | GTS/TEOS | water | D1 | EGiPrE/TBA/AcAc/MeOH | NMP | SiL1 |
| | 19.89 | 57.46/22.65 | 54.70 | 2.32 | 9.39/55.25/12.43/41.88 | 5.52 | 0.28 |
| Composition 5 | SOL1 | GTS/TEOS | water | D1 | EGiPrE/TBA/AcAc/MeOH | NMP | SiL1 |
| | 19.89 | 57.46/22.65 | 54.70 | 2.32 | 9.39/55.25/12.43/41.88 | 8.00 | 0.28 |
| Composition 6 | SOL1 | GTS/TEOS | water | D1 | EGiPrE/TBA/AcAc/MeOH | CHX | SiL1 |
| | 19.89 | 57.46/22.65 | 54.70 | 2.32 | 9.39/55.25/12.43/41.88 | 1.38 | 0.28 |
| Composition 7 | SOL1 | GTS/TEOS | water | D1 | EGiPrE/TBA/AcAc/MeOH | CHX | SiL1 |
| | 19.89 | 57.46/22.65 | 54.70 | 2.32 | 9.39/55.25/12.43/41.88 | 13.81 | 0.28 |
| Composition 8 | SOL1 | GTS/TEOS | water | D1 | EGiPrE/TBA/AcAc/MeOH | CHX | SiL1 |
| | 19.89 | 57.46/22.65 | 54.70 | 2.32 | 9.39/55.25/12.43/41.88 | 27.62 | 0.28 |
| Composition 9 | SOL1 | GTS/TEOS | water | D1 | EGiPrE/TBA/AcAc/MeOH | ECL | SiL1 |
| | 19.89 | 57.46/22.65 | 54.70 | 2.32 | 9.39/55.25/12.43/41.88 | 0.69 | 0.28 |
| Composition 10 | SOL1 | GTS/TEOS | water | D1 | EGiPrE/TBA/AcAc/MeOH | GBL | SiL1 |
| | 19.89 | 57.46/22.65 | 54.70 | 2.32 | 9.39/55.25/12.43/41.88 | 0.69 | 0.28 |

*: Parts by mass of fine inorganic oxide particles.

Table 2

| Coating composition No. | A pts. by mass* | B pts. by mass | C pts. by mass | D pts. by mass | E pts. by mass | F pts. by mass | G pts. by mass |
|---|---|---|---|---|---|---|---|
| Composition | SOL1 | GTS/TEOS | water | D1 | EGiPrE/TBA/AcAc/MeOH | 2PY | SiL1 |

(continued)

| Coating composition No. | A pts. by mass* | B pts. by mass | C pts. by mass | D pts. by mass | E pts. by mass | F pts. by mass | G pts. by mass |
|---|---|---|---|---|---|---|---|
| 11 | 19.89 | 57.46/22.65 | 54.70 | 2.32 | 9.39/55.25/12.43/41.88 | 0.69 | 0.28 |
| Composition | SOL1 | GTS/TEOS | water | D1 | EGiPrE/TBA/AcAc/ MeOH | VPY | SiL1 |
| 12 | 19.89 | 57.46/22.65 | 54.70 | 2.32 | 9.39/55.25/12.43/41.88 | 0.69 | 0.28 |
| Composition | SOL1 | GTS/TEOS/NSK | water | D1/D2 | EGiPrE/TBA/AcAc/ MeOH | NMP | SiL1 |
| 13 | 19.92 | 29.74/22.68/27.66 | 54.77 | 2.32/0.41 | 9.40/55.32/12.45/41.93 | 0.69 | 0.28 |
| Composition | SOL1 | GTS/TEOS/NSK | water | D1/D3 | EGiPrE/TBA/AcAc/ MeOH | NMP | SiL1 |
| 14 | 19.92 | 29.74/22.68/27.66 | 54.77 | 2.32/0.41 | 9.40/55.32/12.45/41.93 | 0.69 | 0.28 |
| Composition | SOL2 | GTS/BSE | 0.017N HCl | D1 | TBA/DAA/MeOH | NMP | SiL1 |
| 15 | 44.55 | 47.55/7.90 | 39.85 | 2.99 | 18.83/62.29/66.82 | 0.14 | 0.15 |
| Composition | SOL2 | GTS/BSE | 0.017N HCl | D1 | TBA/DAA/MeOH | NMP | SiL1 |
| 16 | 44.55 | 47.55/7.90 | 39.85 | 2.99 | 18.83/62.29/66.82 | 0.69 | 0.15 |
| Composition | SOL2 | GTS/BSE | 0.017N HCl | D1 | TBA/DAA/MeOH | NMP | SiL1 |
| 17 | 44.55 | 47.55/7.90 | 39.85 | 2.99 | 18.83/62.29/66.82 | 2.76 | 0.15 |
| Composition | SOL2 | GTS/TEOS/GDS | 0.017N HCl | D1 | TBA/DAA/MeOH | NMP | SiL1 |
| 18 | 42.30 | 35.04/13.62/9.04 | 46.45 | 2.84 | 17.88/59.15/63.45 | 0.14 | 0.15 |
| Composition | SOL2 | GTS/TEOS/GDS | 0.017N HCl | D1 | TBA/DAA/MeOH | NMP | SiL1 |
| 19 | 42.30 | 35.04/13.62/9.04 | 46.45 | 2.84 | 17.88/59.15/63.45 | 0.69 | 0.15 |
| Composition | SOL2 | GTS/TEOS/GDS | 0.017N HCl | D1 | TBA/DAA/MeOH | NMP | SiL1 |
| 20 | 42.30 | 35.04/13.62/9.04 | 46.45 | 2.84 | 17.88/59.15/63.45 | 2.76 | 0.15 |

*: Parts by mass of fine inorganic oxide particles.

Table 3

| Coating composition No. | A pts. by mass* | B pts. by mass | C pts. by mass | D pts. by mass | E pts. by mass | F pts. by mass | G pts. by mass |
|---|---|---|---|---|---|---|---|
| Composition 21 | SOL3 | GTS/SK/NSK | 0.017N HCl | D1 | TBA/DAA/MeOH | NMP | SiL1 |
| | 43.94 | 36.40/8.01/11.65 | 40.29 | 2.95 | 18.58/61.45/102.53 | 0.14 | 0.15 |
| Composition 22 | SOL3 | GTS/SK/NSK | 0.017N HCl | D1 | TBA/DAA/MeOH | NMP | SiL1 |
| | 43.94 | 36.40/8.01/11.65 | 40.29 | 2.95 | 18.58/61.45/102.53 | 0.69 | 0.15 |
| Comparative | SOL1 | GTS/TEOS | water | D1 | EGiPrE/TBA/AcAc/ MeOH | NMP | SiL1 |
| composition 1 | 19.89 | 57.46/22.65 | 54.70 | 2.32 | 9.39/55.25/12.43/41.88 | 0.05 | 0.28 |

(continued)

| Coating composition No. | A pts. by mass* | B pts. by mass | C pts. by mass | D pts. by mass | E pts. by mass | F pts. by mass | G pts. by mass |
|---|---|---|---|---|---|---|---|
| Comparative | SOL1 | GTS/TEOS | water | D1 | EGiPrE/TBA/AcAc/MeOH | CHX | SiL1 |
| composition 2 | 19.89 | 57.46/22.65 | 54.70 | 2.32 | 9.39/55.25/12.43/41.88 | 35.00 | 0.28 |
| Comparative | SOL1 | GTS/TEOS | water | D1 | EGiPrE/TBA/AcAc/MeOH | DMSO** | SiL1 |
| composition 3 | 19.89 | 57.46/22.65 | 54.70 | 2.32 | 9.39/55.25/12.43/41.88 | 0.69 | 0.28 |
| Comparative | SOL1 | GTS/TEOS | water | D1 | EGiPrE/TBA/AcAc/MeOH | DMF** | SiL1 |
| composition 4 | 19.89 | 57.46/22.65 | 54.70 | 2.32 | 9.39/55.25/12.43/41.88 | 0.69 | 0.28 |
| Comparative | SOL1 | GTS/TEOS | water | D1 | EGiPrE/TBA/AcAc/MeOH | DMAC** | SiL1 |
| composition 5 | 19.89 | 57.46/22.65 | 54.70 | 2.32 | 9.39/55.25/12.43/41.88 | 0.69 | 0.28 |
| Comparative | SOL1 | GTS/TEOS | water | D1 | EGiPrE/TBA/AcAc/MeOH | AC** | SiL1 |
| composition 6 | 19.89 | 57.46/22.65 | 54.70 | 2.32 | 9.39/55.25/12.43/41.88 | 0.69 | 0.28 |
| Comparative | SOL2 | GTS/BSE | 0.017N HCl | D1 | TBA/DAA/MeOH | - | SiL1 |
| composition 7 | 44.55 | 47.55/7.90 | 39.85 | 2.99 | 18.83/62.29/66.82 | | 0.15 |
| Comparative | SOL2 | GTS/BSE | 0.017N HCl | D1 | TBA/DAA/MeOH | NMP | SiL1 |
| composition 8 | 44.55 | 47.55/7.90 | 39.85 | 2.99 | 18.83/62.29/66.82 | 0.05 | 0.15 |

*: Parts by mass of fine inorganic oxide particles.
**: Comparative compositions 3 to 6 have used compounds other than the cyclic ketone.

<Example 1>

An optical substrate (lens material) AC2 having a thickness of about 2 mm was dipped in an aqueous solution containing 20% by mass of sodium hydroxide maintained at 60˚C, and was etched with an alkali for 10 minutes by using an ultrasonic washing device.
After the etching with alkali, the optical substrate was washed with tap water and with distilled water maintained at 50˚C successively so that the remaining alkali component was removed. After that, the optical substrate was left to stand for about 10 minutes until it was cooled down to room temperature. The lens material was dip-coated with the coating composition 1 at 25˚C and at a pull-up rate of 20 cm/min.
Thereafter, the optical substrate (lens material) was pre-cured in an oven heated at 70˚C for 15 minutes and was, thereafter, cured at 110˚C for 2 hours to obtain an optical article (lens with hard coating) having a hard coating of a thickness of 3.0 μm formed on both surfaces of the optical substrate (lens material)CR.

(Evaluated results of the optical article)

The optical article (lens with hard coating) was evaluated for its appearance, steel wool scratch resistance, adhesion testing and boiling adhesion testing to find that:

Appearance: ○

Steel wool scratch resistance: A
Close adhesion: 100/100
Boiling adhesion testing: 3 hours

The results were as shown in Table 4.
The evaluations were based on the following methods.

(Appearance)

Presence of cracks in the hard coating was observed with the eye.

○: Occurrence of cracks was not recognized.
X: Occurrence of cracks was recognized, and the appearance was obviously poor.

(Steel wool scratch resistance)

By using a steel wool (Bonstar #0000 manufactured by Nihon Steel Wool Co.) while applying a load of 3 kg, the surface of the optical article (surface of the hard coating) was rubbed 10 round trips, and the scratched degree was evaluated with the eye. The evaluation was on the following basis.

A: Was not scratched (scratch could not be recognized with the eye).
B: Was almost not scratched (not less than 1 but less than 5 scratch lines as viewed with the eye).
C: Scratched a little (not less than 5 but less than 10 scratch lines as viewed with the eye).
D: Scratched (not less than 10 scratch lines as viewed with the eye).
E: Hard coating was removed.

(Close adhesion testing)

Close adhesion between the hard coating and the lens was evaluated by the cross-cut tape test in compliance with the JIS D-0202.
That is, by using a cutter knife, the surface of the hard coating was incised at about 1 mm intervals to form 100 squares. An adhesive cellophane tape (Cellotape, manufactured by Nichiban Co.) was strongly stuck thereon, and was pulled and removed at one time in a direction of 90˚ relative to the surface, and the squares of the hard coating still remaining were counted.
The evaluated results were expressed as the (remaining number of squares)/100.

(Boiling adhesion testing)

The optical substrate (optical article) on which the hard coating has been laminated was put into the boiling distilled water and was tested for its adhesion as described above every after one hour up to a maximum testing time of 5 hours. The evaluated results were expressed as a maximum boiling testing time of when 95/100 was attained in the above close adhesion testing. Therefore, what are described in Table as 5 hours demonstrate that the optical articles put in the boiling distilled water for 5 hours possessed not less than 95/100 squares in the above close adhesion testing.

(Weather-proof testing: evaluation of ΔYI)

The optical substrate (lens AC2) having a photochromic layer contains much photochromic compound in the layer and often exhibits poor weather-proof property. When the hard coating comprising the coating composition of the invention is formed on the photochromic layer, however, weather-proof property can be improved. The weather-proof property was evaluated according to the method described below.
By using a xenon weatherometer X25 (2. 5 kW xenon arc light) manufactured by Suga Shikenki Co., the lens (lens using AC2) having the sample photochromic layer was irradiated with light for 100 hours under the conditions of an irradiation intensity of 40 $W/m^2$ and a lens surface temperature of 50˚C to promote the deterioration.
Next, by using an SM color computer (SM-T) manufactured by Suga Shikenki Co., YI($YI_0$) of before promoting the deterioration and YI($YI_{100}$) after the deterioration was promoted were measured, and the yellow color-developing deterioration was found according to the following formula to evaluate the development of yellow color.

$$\text{Yellow color-developing deterioration } (\Delta YI) = YI_{100} - YI_0$$

The smaller the yellow color-developing deterioration (ΔYI), the less the yellow color-developing deterioration of the lens after it has been deteriorated, meaning the lens has excellent weather-proof property.

<Examples 2 to 29, Comparative Examples 1 to 9>

Plastic lenses having hard coatings were prepared by applying the coating compositions shown in Tables 1 to 3 onto the optical substrates (lens materials) shown in Tables 4 and 5 in the same manner as in Example 1 but varying the pre-treating conditions, and were evaluated. The results of evaluation were as shown in Tables 4 and 5.
The lenses using AC2 as the optical substrate which has the photochromic layer were evaluated for their weather-proof properties, too.
Table 4

| | Composition | material | Pre-treatment Alkali conc./ temp./time | (1) | (2) | Initial adhesion | Boiling adhesion | ΔYI |
|---|---|---|---|---|---|---|---|---|
| Ex. 1 | Composition 1 | AC2 | 20% NaOH/ 60˚C/5 min. | ○ | A | 100/100 | 3 hours | 2.0 |
| Ex. 2 | Composition 2 | AC2 | 20% NaOH/ 60˚C/5 min. | ○ | A | 100/100 | 5 hours | 2.2 |
| Ex. 3 | Composition 3 | AC2 | 20% NaOH/ 60˚C/5 min. | ○ | B | 100/100 | 5 hours | 2.5 |
| Ex. 4 | Composition 4 | AC2 | 20% NaOH/ 60˚C/5 min. | ○ | C | 100/100 | 5 hours | 2.7 |
| Ex. 5 | Composition 5 | AC2 | 20% NaOH/ 60˚C/5 min. | ○ | C | 100/100 | 5 hours | 3.0 |
| Ex. 6 | Composition 3 | AC1 | 20% NaOH/ 60˚C/5 min. | ○ | B | 100/100 | 5 hours | - |
| Ex. 7 | Composition 1 | CR | 5% NaOH/ 60˚C/5 min. | ○ | A | 100/100 | 5 hours | - |
| Ex. 8 | Composition 2 | MRA | 10% NaOH/ 60˚C/5 min. | ○ | A | 100/100 | 5 hours | - |
| Ex. 9 | Composition 2 | MRB | 10% NaOH/ 60˚C/5 min. | ○ | A | 100/100 | 5 hours | - |
| Ex. 10 | Composition 3 | TE | 20% NaOH/ 60˚C/5 min. | ○ | A | 100/100 | 5 hours | - |
| Ex. 11 | Composition 6 | AC2 | 20% NaOH/ 60˚C/5 min. | ○ | A | 100/100 | 3 hours | 2.1 |
| Ex. 12 | Composition 7 | AC2 | 20% NaOH/ 60˚C/5 min. | ○ | A | 100/100 | 5 hours | 2.5 |
| Ex. 13 | Composition 8 | AC2 | 20% NaOH/ 60˚C/5 min. | ○ | B | 100/100 | 5 hours | 2.8 |
| Ex. 14 | Composition 9 | AC2 | 20% NaOH/ 60˚C/5 min. | ○ | A | 100/100 | 3 hours | 2.3 |
| Ex. 15 | Composition 10 | AC2 | 20% NaOH/ 60˚C/5 min. | ○ | A | 100/100 | 3 hours | 2.2 |
| Ex. 16 | Composition 11 | AC2 | 20% NaOH/ 60˚C/5 min. | ○ | A | 100/100 | 3 hours | 2.2 |
| Ex. 17 | Composition 12 | AC2 | 20% NaOH/ 60˚C/5 min. | ○ | A | 100/100 | 3 hours | 2.3 |
| Ex. 18 | Composition 13 | ΔC1 | 20% NaOH/ 60˚C/5 min. | ○ | A | 100/100 | 5 hours | - |

(continued)

| | Composition | material | Pre-treatment Alkali conc./ temp./time | (1) | (2) | Initial adhesion | Boiling adhesion | ΔYI |
|---|---|---|---|---|---|---|---|---|
| Ex. 19 | Composition 14 | AC1 | 20% NaOH/ 60˚C/5 min. | ○ | A | 100/100 | 5 hours | - |
| Ex. 20 | Composition 15 | AC2 | 20% NaOH/ 60˚C/5 min. | ○ | A | 100/100 | 3 hours | 2.0 |
| Ex. 21 | Composition 16 | AC2 | 20% NaOH/ 60˚C/5 min. | ○ | A | 100/100 | 5 hours | 2.2 |
| Ex. 22 | Composition 17 | MRA | 10% NaOH/ 60˚C/5 min. | ○ | A | 100/100 | 5 hours | - |
| Ex. 23 | Composition 15 | MRA | 10% NaOH/ 60˚C/5 min. | ○ | A | 100/100 | 5 hours | - |

(1): Appearance
(2): Steel wool scratch resistance

Table 5

| | Composition | Lens material | Pre-treatment Alkali conc./ temp./time | (1) | (2) | Initial adhesion | Boiling adhesion | ΔYI |
|---|---|---|---|---|---|---|---|---|
| Ex. 24 | Composition 16 | MRB | 10% NaOH/ 60˚C/5 min. | ○ | A | 100/100 | 5 hours | - |
| Ex. 25 | Composition 18 | AC2 | 20% NaOH/ 60˚C/5 min. | ○ | A | 100/100 | 3 hours | 2.1 |
| Ex. 26 | Composition 19 | AC2 | 20% NaOH/ 60˚C/5 min. | ○ | A | 100/100 | 5 hours | 2.3 |
| Ex. 27 | Composition 20 | AC1 | 20% NaOH/ 60˚C/5 min. | ○ | B | 100/100 | 5 hours | - |
| Ex. 28 | Composition 21 | AC2 | 20% NaOH/ 60˚C/5 min. | ○ | A | 100/100 | 3 hours | 2.1 |
| Ex. 29 | Composition 22 | AC2 | 20% NaOH/ 60˚C/5 min. | ○ | A | 100/100 | 5 hours | 2.3 |
| Comp. Ex. 1 | Comparative composition 1 | AC2 | 20% NaOH/ 60˚C/5 min. | ○ | A | 100/100 | 1 hour | 2.0 |
| Comp. Ex. 2 | Comparative composition 2 | AC2 | 20% NaOH/ 60˚C/5 min. | ○ | D | 100/100 | 5 hours | 3.0 |
| Comp. Ex. 3 | Comparative composition 3 | AC2 | 20% NaOH/ 60˚C/5 min. | ○ | A | 100/100 | 1 hour | 2.3 |
| Comp. Ex. 4 | Comparative composition 4 | AC2 | 20% NaOH/ 60˚C/5 min. | ○ | A | 100/100 | 1 hour | 2.3 |
| Comp. Ex. 5 | Comparative composition 5 | AC2 | 20% NaOH/ 60˚C/5 min. | ○ | A | 100/100 | 1 hour | 2.3 |
| Comp. Ex. 6 | Comparative composition 6 | AC2 | 20% NaOH/ 60˚C/5 min. | ○ | A | 100/100 | 1 hour | 2.3 |

(continued)

| | Composition | Lens material | Pre-treatment Alkali conc./ temp./time | (1) | (2) | Initial adhesion | Boiling adhesion | ΔYI |
|---|---|---|---|---|---|---|---|---|
| Comp. Ex. 7 | Comparative composition 7 | MRA | 10% NaOH/ 50˚C/5 min. | ○ | A | 20/100 | - | - |
| Comp. Ex. 8 | Comparative composition 8 | MRA | 10% NaOH/ 50˚C/5 min. | ○ | A | 40/100 | - | - |
| Comp. Ex. 9 | Comparative composition 8 | MRB | 10% NaOH/ 60˚C/5 min. | × | - | - | - | - |

(1): Appearance
(2): Steel wool scratch resistance

(Preparation of the coating composition 23)

| | |
|---|---|
| GTS (γ-glycidoxypropyltrimethoxysilane) | 44.80 parts by mass, |
| GDS (γ-glycidoxypropylmethyldimethoxysilane) | 5.00 parts by mass, |
| BSE (1,2-bis(triethoxysilyl)ethane) | 10.63 parts by mass, |
| SiL1 (silicone surfactant) | 0.14 parts by mass, |
| DAA (diacetone alcohol) | 57.88 parts by mass, |
| TBA (t-butyl alcohol) | 18.83 parts by mass, and |
| NMP (N-methylpyrrolidone) | 0.86 parts by mass, |

were mixed together.
While sufficiently stirring the above mixture,

0.017N aqueous solution ofhydrochloric acid 42.94 parts by mass,

was added thereto. After the addition has been finished, stirring was continued at 15 to 30˚C for 20 hours.
Next,

D1 tris(2,4-pentanedionato)aluminum(III) 3.57 parts by mass,

was added, the mixture was stirred at 20 to 25˚C for 1 hour, and to which was added,

SOL2 (fine composite metal oxide particle dispersed in methanol) 98.91 parts by mass

(fine composite inorganic oxide particle; 39.57 parts by mass, methanol; 59.34 parts by mass)
followed by stirring for 24 hours to obtain the coating composition 23 of the invention.
The hydrolysis of GTS, GDS and BSE was confirmed to have finished by gas chromatography.
The composition of blending was as shown in Table 6.

(Preparation of the coating compositions 24, 25 and 26)

The coating compositions 24, 25 and 26 were prepared in the same manner as the coating composition 23 but using the component A (fine inorganic oxide particle), component B (hydrolyzable group-containing organosilicon compound), component C (water), component D (curing catalyst), component E (organic solvent), component F (cyclic ketone compound) and component G (silicone surfactant) according to the blending recipes shown in Table 6. Here,

the coating composition 26 was prepared by using the SOL5 instead of the SOL2 at a blending ratio shown in Table 6.

(Preparation of the coating composition 27)

| | |
|---|---|
| GTS (γ-glycidoxypropyltrimethoxysilane) | 42.96 parts by mass, |
| GDS (γ-glycidoxypropylmethyldimethoxysilane) | 4.79 parts by mass, |
| BSE (1,2-bis(triethoxysilyl)ethane) | 10.19 parts by mass, |
| Component G (silicone surfactant) | 0.14 parts by mass, |
| DAA (diacetone alcohol) | 55.50 parts by mass, |
| TBA (t-butyl alcohol) | 16.87 parts by mass, and |
| NMP (N-methylpyrrolidone) | 0.82 parts by mass, |

were mixed together. While sufficiently stirring the above mixture,

| | |
|---|---|
| 0.038N hydrochloric acid | 17.83 parts by mass, and |
| fine cerium oxide particledispersed in water (SOL4) | 27.45 parts by mass, |

were added thereto. After the addition has been finished, stirring was continued at 15 to 30˚C for 20 hours.
Next,

| | |
|---|---|
| D1 (tris(2,4-pentanedionato)aluminum(III)) | 3.42 parts by mass, |

was added, the mixture was stirred at 20 to 25˚C for 1 hour, and to which was added,

| | |
|---|---|
| SOL2 (fine composite metal oxide particle dispersed in methanol) | 94.86 parts by mass |

(fine composite inorganic oxide particle; 37.94 parts by mass, methanol; 56.92 parts by mass)
followed by stirring for 24 hours to obtain the coating composition 27 of the invention.
The hydrolysis of GTS, GDS and BSE was confirmed to have finished by gas chromatography.
The composition of blending was as shown in Table 6.

(Preparation of the coating compositions 28 to 30)

The coating compositions 28 to 30 were prepared in the same manner as the coating composition 27 but using the component A (fine inorganic oxide particle), component B (hydrolyzable group-containing organosilicon compound), component C (water), component D (curing catalyst), component E (organic solvent), component F (cyclic ketone compound) and component G (silicone surfactant) according to the blending recipes shown in Table 6. Here, the coating composition 30 was prepared by using the SOL5 instead of the SOL2 at a blending ratio shown in Table 6 and using 0.046N hydrochloric acid.

Table 6

| Coating composition No. | A pts. by mass* | B pts. by mass | C pts. by mass | D pts. by mass | E pts. by mass | F pts. by mass | G pts. by mass |
|---|---|---|---|---|---|---|---|
| Composition 23 | SOL2 | GTS/GDS/BSE | 0.017N HCl | D1 | TBA/DAA/MeOH | NMP | SiL1 |
| | 39.57 | 44.80/5.00/10.63 | 42.94 | 3.57 | 17.59/57.88/59.34 | 0.86 | 0.14 |
| Composition 24 | SOL2 | GTS/TEOS | 0,017N HCl | D1 | TBA/DAA/MeOH | NMP | SiL1 |

(continued)

| Coating composition No. | A pts. by mass* | B pts. by mass | C pts. by mass | D pts. by mass | E pts. by mass | F pts. by mass | G pts. by mass |
|---|---|---|---|---|---|---|---|
| | 39.57 | 49.80/10.36 | 42.94 | 3.57 | 17.59/57.88/59.34 | 0.86 | 0.14 |
| Composition 25 | SOL2 | GTS/BSE | 0.017N HCl | D1 | TBA/DAA/MeOH | NMP | SiL1\ |
| | 39.57 | 49.80/10.36 | 42.94 | 3.57 | 17.59/57.88/59.34 | 0.86 | 0.14 |
| Composition 26 | SOL5 | GTS/TEOS | 0.017N HCl | D1 | TBA/DAA/MeOH | NMP | SiL1 |
| | 39.82 | 42.72/12.85 | 42.94 | 2.83 | 16.47/54.18/92.91 | 0.82 | 0.08 |
| Composition 27 | SOL2/SOL4 | GTS/GDS/BSE | 0.038N HCl | D1 | TBA/DAA/MeOH | NMP | SiL1 |
| | 37.94/4.12 | 42.96/4.79/10.19 | (1) 41.16 | 3.42 | 16.87/55.50/56.92 | 0.82 | 0.14 |
| Composition 28 | SOL2/SOL4 | GTS/GDS/BSE | 0.038N HCl | D1 | TBA/DAA/MeOH | NMP | SiL1 |
| | 38.98/1.50 | 44.13/4.92/10.47 | (1) 41.16 | 3.42 | 16.87/55.50/56.92 | 0.82 | 0.14 |
| Composition 29 | SOL2/SOL4 | GTS/GDS/BSE | 0.038N HCl | D1 | TBA/DAA/MeOH | NMP | SiL1 |
| | 36.40/8.00 | 41.22/4.60/9.78 | (1) 41.16 | 3.42 | 16.87/55.50/56.92 | 0.82 | 0.14 |
| Composition 30 | SOL5/SOL4 | GTS/TEOS | 0.046N HCl | D1 | TBA/DAA/MeOH | NMP | SiL1 |
| | 39.82/4.61 | 42.72/12.85 | (1) 41.75 | 2.83 | 16.47/54.18/92.91 | 0.82 | 0.08 |

*: Parts by mass of fine inorganic oxide particles.
(1): acetic acid aq. sol.

<Examples 30 to 72>

Plastic lenses having hard coatings were prepared by applying the coating compositions shown in Table 6 onto the optical substrates (lens materials) shown in Tables 7 and 8 in the same manner as in Example 1 but varying the pre-treating conditions, and were evaluated. The results of evaluation were as shown in Tables 7 and 8.
The lenses using AC2 as the optical substrate which has the photochromic layer were evaluated for their weather-proof properties, too.
Table 7

| | Composition | Lens material | Alkali conc./ temp./time | (1) | (2) | Initial adhesion | Boiling adhesion | ΔYI |
|---|---|---|---|---|---|---|---|---|
| Ex. 30 | Composition 23 | CR | 5% NaOH/ 60˚C/5 min. | ○ | A | 100/100 | 5 hours | - |
| Ex. 31 | Composition 23 | MRA | 10% NaOH/ 60˚C/5 min. | ○ | A | 100/100 | 5 hours | - |
| Ex. 32 | Composition 23 | MRB | 10% NaOH/ 60˚C/5 min. | ○ | A | 100/100 | 5 hours | - |
| Ex. 33 | Composition 23 | TE | 20% NaOH/ 60˚C/5 min. | ○ | A | 100/100 | 5 hours | - |
| Ex. 34 | Composition 23 | AC1 | 20% NaOH/ 60˚C/5 min. | ○ | A | 100/100 | 5 hours | - |

(continued)

| | Composition | Lens material | Alkali conc./ temp./time | (1) | (2) | Initial adhesion | Boiling adhesion | ΔYI |
|---|---|---|---|---|---|---|---|---|
| Ex. 35 | Composition 23 | AC2 | 20% NaOH/ 50˚C/5 min. | ○ | A | 100/100 | 5 hours | 2.3 |
| Ex. 36 | Composition 24 | CR | 5% NaOH/ 60˚C/5 min. | ○ | A | 100/100 | 5 hours | - |
| Ex. 37 | Composition 24 | MRA | 10% NaOH/ 60˚C/5 min. | ○ | A | 100/100 | 5 hours | - |
| Ex. 38 | Composition 24 | MRB | 10% NaOH/ 60˚C/5 min. | ○ | A | 100/100 | 5 hours | - |
| Ex. 39 | Composition 24 | TE | 20% NaOH/ 60˚C/5 min. | ○ | A | 100/100 | 5 hours | - |
| Ex. 40 | Composition 24 | AC1 | 20% NaOH/ 60˚C/5 min. | ○ | A | 100/100 | 5 hours | - |
| Ex. 41 | Composition 24 | AC2 | 20% NaOH/ 60˚C/5 min. | ○ | A | 100/100 | 5 hours | 2.1 |
| Ex. 42 | Composition 25 | CR | 5% NaOH/ 60˚C/5 min. | ○ | A | 100/100 | 5 hours | - |
| Ex. 43 | Composition 25 | MRA | 10% NaOH/ 60˚C/5 min. | ○ | A | 100/100 | 5 hours | - |
| Ex. 44 | Composition 25 | MRB | 10% NaOH/ 60˚C/5 min. | ○ | A | 100/100 | 5 hours | - |
| Ex. 45 | Composition 25 | TE | 20% NaOH/ 60˚C/5 min. | ○ | A | 100/100 | 5 hours | - |
| Ex. 46 | Composition 25 | AC1 | 20% NaOH/ 60˚C/5 min. | ○ | A | 100/100 | 5 hours | - |
| Ex. 47 | Composition 25 | AC2 | 20% NaOH/ 60˚C/5 min. | ○ | A | 100/100 | 5 hours | 2.2 |
| Ex. 48 | Composition 27 | CR | 5% NaOH/ 60˚C/5 min. | ○ | A | 100/100 | 5 hours | - |
| Ex. 49 | Composition 27 | MRA | 10% NaOH/ 60˚C/5 min. | ○ | A | 100/100 | 5 hours | - |
| Ex. 50 | Composition 27 | MRB | 10% NaOH/ 60˚C/5 min. | ○ | A | 100/100 | 5 hours | - |
| Ex. 51 | Composition 27 | TE | 20% NaOH/ 60˚C/5 min. | ○ | A | 100/100 | 5 hours | - |
| Ex. 52 | Composition 27 | AC1 | 20% NaOH/ 60˚C/5 min. | ○ | A | 100/100 | 5 hours | - |
| Ex. 53 | Composition 27 | AC2 | 20% NaOH/ 50˚C/5 min. | ○ | A | 100/100 | 5 hours | 1.8 |

(1): Appearance
(2): Steel wool scratch resistance

Table 8

| | Composition | Lens material | Alkali conc./ temp./time | (1) | (2) | Initial adhesion | Boiling adhesion | ΔYI |
|---|---|---|---|---|---|---|---|---|
| Ex. 54 | Composition 28 | CR | 5% NaOH/ 60˚C/5 min. | ○ | A | 100/100 | 5 hours | - |
| Ex. 55 | Composition 28 | MRA | 10% NaOH/ 60˚C/5 min. | ○ | A | 100/100 | 5 hours | - |

(continued)

| | Composition | Lens material | Alkali conc./ temp./time | (1) | (2) | Initial adhesion | Boiling adhesion | ΔYI |
|---|---|---|---|---|---|---|---|---|
| Ex. 56 | Composition 28 | MRB | 10% NaOH/ 60˚C/5 min. | ○ | A | 100/100 | 5 hours | - |
| Ex. 57 | Composition 28 | TE | 20% NaOH/ 60˚C/5 min. | ○ | A | 100/100 | 5 hours | - |
| Ex. 58 | Composition 28 | AC1 | 20% NaOH/ 60˚C/5 min. | ○ | A | 100/100 | 5 hours | - |
| Ex. 59 | Composition 28 | AC2 | 20% NaOH/ 50˚C/5 min. | ○ | A | 100/100 | 5 hours | 2.0 |
| Ex. 60 | Composition 29 | CR | 5% NaOH/ 60˚C/5 min. | ○ | A | 100/100 | 5 hours | - |
| Ex. 61 | Composition 29 | MRA | 10% NaOH/ 60˚C/5 min. | ○ | A | 100/100 | 5 hours | - |
| Ex. 62 | Composition 29 | MRB | 10% NaOH/ 60˚C/5 min. | ○ | A | 100/100 | 5 hours | - |
| Ex. 63 | Composition 29 | TE | 20% NaOH/ 60˚C/5 min. | ○ | A | 100/100 | 5 hours | - |
| Ex. 64 | Composition 29 | AC1 | 20% NaOH/ 60˚C/5 min. | ○ | A | 100/100 | 5 hours | - |
| Ex. 65 | Composition 29 | AC2 | 20% NaOH/ 50˚C/5 min. | ○ | A | 100/100 | 5 hours | 1.4 |
| Ex. 66 | Composition 30 | CR | 5% NaOH/ 60˚C/5 min. | ○ | A | 100/100 | 5 hours | - |
| Ex. 67 | Composition 30 | MRA | 10% NaOH/ 60˚C/5 min. | ○ | A | 100/100 | 5 hours | - |
| Ex. 68 | Composition 30 | MRB | 10% NaOH/ 60˚C/5 min. | ○ | A | 100/100 | 5 hours | - |
| Ex. 69 | Composition 30 | TE | 20% NaOH/ 60˚C/5 min. | ○ | A | 100/100 | 5 hours | - |
| Ex. 70 | Composition 30 | AC1 | 20% NaOH/ 60˚C/5 min. | ○ | A | 100/100 | 5 hours | - |
| Ex. 71 | Composition 30 | AC2 | 20% NaOH/ 50˚C/5 min. | ○ | A | 100/100 | 5 hours | 1.8 |
| Ex. 72 | Composition 26 | MRB | 10% NaOH/ 60˚C/5 min. | ○ | A | 100/100 | 5 hours | - |

(1): Appearance
(2): Steel wool scratch resistance

As will be obvious from the above Examples and Comparative Examples, the optical articles having hard coatings formed by using the compositions of the invention which contained the cyclic ketone compound were free from the problem in the appearance such as cracks, transparency of the coating or repelling, and, particularly, the hard coatings adhered very closely to various kinds of lens materials as compared to Comparative Examples.
When the photochromic hard coating lenses having hard coatings formed by using the composition of the invention containing the cyclic ketone compound were used for extended periods of time, it was confirmed that their degrees of yellow color-developing deterioration were equal to those of when no cyclic ketone compound was used.
Therefore, the composition of the present invention using the cyclic ketone compound makes it possible to impart closely adhering property and to suppress cracks without impairing excellent properties which are inherent in the hard coating.

## Claims

**1.** A coating composition for forming a hard coating, containing a fine inorganic oxide particle, a hydrolyzable organosilicon compound, water, a curing catalyst and an organic solvent, wherein cyclic ketone is contained in an amount of 0.10 parts by mass to 30.00 parts by mass per 100 parts by mass of a total of said fine inorganic oxide particle and said hydrolyzable organosilicon compound.

**2.** The coating composition according to claim 1, wherein said cyclic ketone is a compound containing an oxygen atom or a nitrogen atom as an element for constituting a ring.

**3.** The coating composition according to claim 2, wherein said cyclic ketone is N-methylpyrrolidone.

**4.** The coating composition according to claim 1, wherein said cyclic ketone is cyclohexanone.

**5.** The coating composition according to claim 1, wherein said hydrolyzable organoslicon compound is contained in an amount of 40 to 90 parts by mass per 100 parts by mass of the total of said fine inorganic oxide particle and said hydrolyzable organosilicon compound.

**6.** An optical article having a hard coating obtained by curing the coating composition of claim 1 on a plastic optical substrate.

**7.** The optical article according to claim 6, wherein said plastic optical substrate is a photochromic optical substrate.

**8.** The optical article according to claim 7, wherein said plastic optical substrate has a photochromic layer formed on the surface thereof by curing a polymerization-curable composition that contains a photochromic compound, and said hard coating is formed on said photochromic layer.

**INTERNATIONAL SEARCH REPORT**

International application No.
PCT/JP2010/056460

A. CLASSIFICATION OF SUBJECT MATTER
*C09D183/04*(2006.01)i, *B32B27/00*(2006.01)i, *C09D7/12*(2006.01)i, *G02B1/10*(2006.01)i, *G02B5/23*(2006.01)i

According to International Patent Classification (IPC) or to both national classification and IPC

B. FIELDS SEARCHED

Minimum documentation searched (classification system followed by classification symbols)
C09D183/04, B32B27/00, C09D7/12, G02B1/10, G02B5/23

Documentation searched other than minimum documentation to the extent that such documents are included in the fields searched
Jitsuyo Shinan Koho 1922-1996 Jitsuyo Shinan Toroku Koho 1996-2010
Kokai Jitsuyo Shinan Koho 1971-2010 Toroku Jitsuyo Shinan Koho 1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 53-111336 A (Toray Industries, Inc.), 28 September 1978 (28.09.1978), claims; page 3, lines 7 to 12 & BE 864691 A1 & DE 2810072 A & NL 7802636 A & SE 7802753 A & BR 7801476 A & FR 2383220 A & US 4211823 A & GB 1596107 A & CH 628366 A & CA 1118929 A & IT 1109127 B & AU 3397678 A | 1-8 |
| Y | WO 2001/042381 A1 (Tokuyama Corp.), 14 June 2001 (14.06.2001), claims; page 8, line 22 to page 9, line 14 & EP 1153998 A1 & KR 2001-108168 A & CN 1346392 A & US 2002/0182416 A1 & DE 60026353 E & ES 2255517 T3 & CA 2362652 C & JP 2001-543668 A | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 May, 2010 (20.05.10) | 01 June, 2010 (01.06.10) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2010/056460

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-115087 A (Nissan Chemical Industries, Ltd.),<br>24 April 2001 (24.04.2001),<br>claims; paragraphs [0031], [0064]<br>(Family: none) | 1-8 |
| Y | JP 2001-116904 A (Nissan Chemical Industries, Ltd.),<br>27 April 2001 (27.04.2001),<br>claims; paragraphs [0029], [0073]<br>(Family: none) | 1-8 |
| Y | JP 2004-010704 A (Nitto Denko Corp.),<br>15 January 2004 (15.01.2004),<br>claims; paragraphs [0008] to [0009]<br>(Family: none) | 1-8 |
| Y | JP 2005-076006 A (Fuji Photo Film Co., Ltd.),<br>24 March 2005 (24.03.2005),<br>claims; paragraphs [0156] to [0165], [0177]<br>& US 2005/0053790 A1 & KR 2005-0025087 A | 1-8 |
| Y | WO 2003/099550 A1 (Tokuyama Corp.),<br>04 December 2003 (04.12.2003),<br>claims; page 74, lines 4 to 11<br>& AU 2003234848 A1 & KR 2004-111328 A<br>& CN 1578727 A & EP 1561571 A1<br>& US 2007/0065633 A1 & DE 60327545 E<br>& ES 2326875 T3 & JP 2004-507058 A | 7,8 |
| Y | JP 2005-023238 A (Tokuyama Corp.),<br>27 January 2005 (27.01.2005),<br>claims; paragraph [0104]<br>(Family: none) | 7,8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 57002735 B
- WO 0142381 A
- JP 11119001 A